# EUROPÄISCHE PATENTSCHRIFT

(11) **EP 3 470 802 B1**
(45) Veröffentlichungstag und Bekanntmachung des Hinweises auf die Patenterteilung: **10.03.2021**
(21) Anmeldenummer: 17195994.3
(22) Anmeldetag: 11.10.2017
(51) Int. Cl.: G01F 23/296

(54) **FÜLLSTANDSMESSGERÄT UND VERFAHREN FÜR DIE BESTIMMUNG DER MENGE AN SCHÜTTGUT IN EINEM BEHÄLTER**
FILL LEVEL MEASURING DEVICE AND METHOD FOR DETERMINING THE AMOUNT OF BULK MATERIAL IN A CONTAINER
DISPOSITIF DE MESURE DE NIVEAU DE REMPLISSAGE ET PROCÉDÉ POUR DÉTERMINER LA QUANTITÉ DE MATIÈRE EN VRAC DANS UN RÉCIPIENT

(43) Veröffentlichungstag der Anmeldung: 17.04.2019
(73) Patentinhaber: WIKON Kommunikationstechnik GmbH, 67657 Kaiserslautern (DE)
(72) Erfinder: Molz, Joachim, 54290 Trier (DE); Beyer, Hans-Jörg, 67659 Kaiserslautern (DE); Schitter, Clemens, 67697 Otterberg-Drehenthalerhof (DE); Konzelmann, Andreas, 66424 Homburg (DE); Seewig, Jörg, 30539 Hannover (DE); Stelzer, Gerhard, 67663 Kaiserslautern (DE); Anslinger, Lukas, 66424 Homburg (DE); Sivasothy, Paaranan, 66287 Quierschied (DE)
(74) Vertreter: Metten, Karl-Heinz

(56) Entgegenhaltungen:
- US-A- 3 498 500
- US-A1- 2010 206 066
- US-A1- 2014 366 619

## Beschreibung

Die Erfindung betrifft ein Füllstandsmessgerät zur Bestimmung des Füllstands eines Behälters über Schwingungs- und/oder Schalldruckänderungen, die durch eine Schwingungserzeugungseinrichtung ausgelöst werden. Die Erfindung betrifft ferner ein Kit aus einem Behälter und mindestens einem solchen Füllstandsmessgerät Die Erfindung betrifft auch ein Verfahren für die Bestimmung des Füllstands eines Behälters mit mindestens einem Füllstandsmessgerät über Schwingungs- und/oder Schalldruckänderungen, die durch eine Schwingungserzeugungseinrichtung ausgelöst wurden und die Verwendung des Füllstandsmessgeräts für die Bestimmung der Menge an Füllgut in einem Behälter.

Überwachungstechniken der Füllstände von Silos sind aus dem Stand der Technik bekannt. Besagte Überwachungstechniken umfassen beispielsweise mechanische Sensoren, Radarsensoren, elektromechanische Sensoren, visuelle Sensoren, Gewichtssensoren, Lasersensoren, Kapazitätssensoren und viele weitere Sensortypen. Jeder dieser Sensortypen hat gewisse sensorspezifische Vor- und Nachteile. Eine Bestimmung des Füllstands über Ultraschall oder Radar erfolgt beispielsweise, indem das Füllgut mit entsprechenden Ultraschalloder Radarwellen bestrahlt und die reflektierten Wellen gemessen werden. Meist befinden sich die Sensoren zu diesem Zweck ganz oder teilweise innerhalb des Behälters. Auch ist es grundsätzlich möglich, durch Messeinrichtungen außerhalb eines Behälterinnenraums beispielsweise mittels Radiometrie den Füllstand zu bestimmen, wobei ein radioaktives Isotop Gammastrahlen aussendet, die beim Durchdringen von Materie abgeschwächt werden, und ein Sensor diese Gammastrahlen erfasst und basierend hierauf den Füllstand bestimmt. Oftmals messen auch Sensoren nicht den Füllstand, sondern bestimmen nur, ob ein Grenzwert an Füllgut überschritten wird. In einer einfachen Ausgestaltung wäre beispielsweise ein Sensor denkbar, der auf Feuchtigkeit oder Kontakt reagiert, in einen Behälterhineinragt und ein Alarmsignal abgibt, wenn er in eine Flüssigkeit eintaucht oder sonstiges Füllgut kontaktiert.

Die WO 2009 047 310 A1 offenbart einen Füllstandsensor zur Bestimmung eines Füllstands von Schüttgütern in einem Silo aus einem flexiblen Material, wobei das flexible Material einen flexiblen Behälter mit einer flexiblen Wandung ausbildet, beinhaltend: eine erste Elektrode, die angrenzend an oder innerhalb der flexiblen Wandung zur Verfügung gestellt ist; eine zweite Elektrode, die in einem vorbestimmten Abstand von der ersten Kondensatorelektrode und angrenzend an oder innerhalb der flexiblen Wandung zur Verfügung gestellt ist; eine einen Schwingkreis beinhaltende Sensorelektronik, wobei die erste Elektrode und die zweite Elektrode elektrisch mit der Sensorelektronik verbunden und elektrisch voneinander isoliert sind; und eine Kontrolleinheit, die geeignet ist, einen von der Sensorelektronik zur Verfügung gestellten Wert in einen Füllstand umzurechnen.

Die DE 100 08 093 A1 betrifft ein kapazitives Füllstandsmessgerät mit einem mehrere Sensorfelder aufweisenden Füllstandssensor, mit an die Sensorfelder des Füllstandssensors angeschlossenen elektrischen Leitungen, mit einem mit seiner Mehrpolseite an die den Sensorfeldern des Füllstandssensors fernen Enden der Leitungen angeschlossenen Auswahlschalter und mit einer an die Einpolseite des Auswahlschalters angeschlossenen Versorgungs- und Auswerteschaltung, wobei die Sensorfelder des Füllstandssensors flächenförmig ausgeführt und übereinander angeordnet sind sowie vorzugsweise aus Metall bestehen.

Die US 4,589,077 offenbart die Bestimmung eines Flüssigkeitsspiegels innerhalb eines Tanks mittels einer Kapazitätssonde, die eine Säule von Kondensatoren umfasst, die sich durch eine Flüssigkeitspegelschnittstelle erstrecken. Jeder Kondensator der Sonde wird sequentiell in Reaktion auf mikroprozessorgesteuerte Befehle als Teil einer am Tank befindlichen Messeinheit gemessen. Bis zu sechzehn Messeinheiten können in einem Feld miteinander verbunden und einzeln mit einem Mikrocomputersystem an einer zentralen Station verbunden werden. Durch die Identifizierung des Kondensators an dem Flüssigkeitsspiegel wird die Höhe der Flüssigkeit innerhalb eines Tanks durch das Mikrocomputersystem berechnet. Aus dieser Höhenmessung und gespeicherten Tankdaten wird das Flüssigkeitsvolumen innerhalb eines Tanks berechnet.

Die US 2034/0366619 A1 offenbart einen akustischen Volumenindikator zum Bestimmen eines Flüssigkeits- oder Gasvolumens in einem Behälter umfassen einen Kontaktgeber zum Erzeugen einer Vibration einer Behälterwand des Behälters. Ein Detektor zum Empfangen von Schwingungsdaten von der Behälterwand ist vorgesehen.

Die US 2010/0206066 A1 offenbart eine Messvorrichtung und ein Verfahren zur Bestimmung des Flüssigkeitsstandes in einem Behälter mit einer Wand. Eine Kraft wird auf die Wand des Behälters ausgeübt und die resultierende Impulsantwort wird gemessen. Auf Basis der Impulsantwort erfolgt eine Bestimmung des Flüssigkeitsstandes im Behälter.

Die US 3 498 500 A betrifft ein Verfahren zur Bestimmung der in einem Behälter vorhandenen Menge von Tonerpulver in elektrofotografischen Reproduktionsmaschinen, wobei ein akustisches Signal mit einer der jeweiligen Menge an Tonerpulver entsprechenden Amplitude erzeugt, ausgewertet und mit einem vorgegebenen Signalpegel verglichen wird, und wobei aus diesem Vergleich ein der festgestellten Amplitudendifferenz entsprechendes Steuersignal abgeleitet und zur Anzeige der Änderung der Stoffmenge ausgewertet wird.

Die DE 20 2006 009 381 U1 offenbart eine Vorrichtung zum Messen eines Füllstands mit kapazitiven Füllstandssensoren zur Bestimmung eines Füllstands von trockenen Schüttgütern. Im Besonderen betrifft die Erfindung kapazitive Füllstandssensoren zur Messung eines Füllstands von Brennstoffen in einem Silo.

Die EP 0 009 252 A1 offenbart eine Vorrichtung zur Messung des Füllstands in einem mit Flüssigkeit zumindest teilweise gefüllten Behälter, insbesondere in einem Kraftstofftank, welche einen temperaturabhängigen elektrischen Widerstand und Vorrichtungen, die eine Beheizung des Widerstandes bewirken können, enthält und welche ein Messgerät enthält, welches eine durch die Änderung des Füllstands bewirkte Änderung des Widerstandswertes anzeigt.

Ein Nachteil zahlreicher Sensoren des Stands der Technik ist, dass die Bestimmung des Füllstands oftmals recht ungenau ist oder eine umfassende Änderung der Bauweise des Silos erfordert oder im Innenraum des Silos überhaupt nur möglich sind, wo die Sensoren mit dem Füllgut verschmutzt oder durch dieses beschädigt werden können. Zahlreiche Verfahren des Stands der Technik sind auch nur für flüssige Füllgüter überhaupt geeignet.

Der Erfindung hat die Aufgabe zugrunde gelegen, die Nachteile des Stands der Technik zu überwinden und eine Bestimmung der Menge eines Schüttguts mit einem Füllstandsmessgerät zu ermöglichen. Auch ist es eine Aufgabe der vorliegenden Erfindung, die Genauigkeit der Bestimmung des Füllstands zu verbessern. Ferner war es eine Aufgabe, ein kostengünstiges und/oder weitgehend autonomes Füllstandsmessgerät bereitzustellen, insbesondere welches sich für bestehende Behälter nachrüsten lässt, ohne dass die Behälter selbst baulich zu verändern sind. Schlussendlich ist es auch eine Aufgabe ein besonders robustes und langlebiges Füllstandsmessgerät für eine solche Bestimmung des Füllstands bereitzustellen.

Die Aufgabe wird gelöst durch ein Füllstandsmessgerät zur Bestimmung des Füllstands eines Silos umfassend eine Schwingungserzeugungseinrichtung, insbesondere ein Schlagwerk, eine Schall- und/oder Schwingungserfassungseinrichtung, insbesondere ein Mikrofon oder ein Beschleunigungssensor, und eine Datenübertragungseinrichtung, insbesondere eine Funksendemodul zur drahtlosen Datenübertragung, und/oder eine Datenauswerteinrichtung, insbesondere in Form eines mobilen Endgeräts oder eines externen Servers, wobei das Füllstandsmessgerät ausgelegt und eingerichtet ist, mit der Schwingungserzeugungseinrichtung an einer Behälterwandung eines Behälters Schwingungs- und/oder Schalldruckänderungen, insbesondere Schallwellen mit Schwingungs- und/oder Schalldruckänderungen, zu erzeugen, wobei die Schall- und/oder Schwingungserfassungseinrichtung ausgelegt und eingerichtet ist, diese Schwingungs- und/oder Schalldruckänderungen zu erfassen und in analoge und/oder digitale Signale umzuwandeln, wobei die Datenübertragungseinrichtung ausgelegt und eingerichtet ist, die analogen und/oder digitalen Signale zu übertragen und/oder wobei die Datenauswerteinrichtung ausgelegt und eingerichtet ist, die analogen und/oder digitalen Signale zu verarbeiten und einen Füllstand zu berechnen.

Das erfindungsgemäße Füllstandsmessgerät eignet sich insbesondere zur Bestimmung des Füllstands von Metallbehältern, d.h. von Behältern mit Metallwänden, oder von Behältern, die mindestens eine Metallwandung, an der das Füllgut vorzugsweise innenseitig unmittelbar anliegt, aufweisen. Hierbei liegt die Schwingungserzeugungseinrichtung vorzugsweise außenseitig in Bezug auf die Metallwandung vor bzw. wirkt von außen auf die Metallwandung ein. Alternativ kann auch vorgesehen sein, die Schwingungserzeugungseinrichtung innenseitig anzubringen bzw. auf die Innenseite der Metallwandung eines Behälters, beispielsweise Silos einwirken zu lassen. Üblicherweise handelt es sich bei den Metallbehältern bzw. den Metallwandungen um solche aus Stahl.

Es hat sich überraschenderweise gezeigt, dass über Schwingungs- und/oder Schalldruckänderungen, welche gezielt mittels einer Schwingungserzeugungseinrichtung erzeugt werden, Rückschlüsse auf die genaue Menge an Füllgut innerhalb eines Behälters möglich sind. Dies funktioniert überraschenderweise auch bei Schüttgut, beispielsweise anorganischem Schüttgut wie Zement oder Mörtelmassen, mit einer sehr hohen Genauigkeit. Im Regelfall lässt sich der Füllstand mit einer Abweichung von weniger als 10 % bestimmen. Die naturwissenschaftliche Ursache für die Korrelation zwischen Schwingungs- und/oder Schalldruckänderung und Füllstand ist noch nicht abschließend untersucht, allerdings wird vermutet, dass das Füllgut einerseits den Behälter geringfügig deformiert und andererseits Schwingungen der Seitenwände des Behälters erheblich durch eine Dämpfung seitens des Füllguts beeinflusst, so dass die Schwingungs- und/oder Schalldruckänderungen charakteristisch für einen Füllstand sind. Auch die Art der Ausbreitung von Schall in dem Schüttgut kann Schwingungs- und/oder Schalldruckänderungen in der Behälterwandung oder der Luft beeinflussen. Wenn also eine kontrollierte und gezielte Anregung erfolgt, kann aus den Schwingungs- und/oder Schalldruckänderungen innerhalb des Körpers und/oder in der Luft auf einen Füllstand geschlossen werden. Das Füllstandsmessgerät wird dabei üblicherweise an der Außenseite einer Behälterwandung befestigt, beispielsweise durch Haftmagneten, so dass der Behälter selbst überhaupt nicht baulich umgestaltet und ferner auch nicht in den Innenraum des Behälters eingegriffen werden muss. Es handelt sich somit um ein besonders einfaches System, welches sich als sehr kostengünstig und zuverlässig erwiesen hat.

Bei einem Füllstand im Sinne der vorliegenden Erfindung handelt es sich vorzugsweise um die Menge des entsprechenden Schüttguts. Die Menge kann als Gewicht, Volumen und/oder einem sonstigen für den Füllstand charakteristischen Wert angegeben werden, beispielweise als Prozentsatz des noch freien oder verbrauchten Platzes in dem Behälter, insbesondere Silo. Bei bekannter Dichte des Füllguts und Größe des Innenraums des Behälters lassen sich das vorstehend genannten Gewicht, Volumen und der Prozentsatz im Regelfall näherungsweise ineinander umrechnen.

Schalldruckänderungen im Sinne der vorliegenden Erfindung sind vorzugsweise Frequenzänderungen des Schalls in der Luft oder in einem Körper, insbesondere der Behälterwandung. In einer Ausgestaltung können alternativ oder zusätzlich zu den Schalldruckänderungen andere Größen, insbesondere Schwingungsänderungen, bestimmt werden, insbesondere Schwingungsamplitude und -frequenz, Schallschnelle, Schallauslenkung, Schallfluss und/oder Schallenergie, wodurch sich die Genauigkeit der Messung, insbesondere bei Verwendung mehrerer Sensoren, steigern lässt. Vorzugsweise umfasst die Erfassung der Schalldruckänderungen die Aufnahme eines Sonogramms.

Schwingungsänderungen im Sinne der vorliegenden Erfindung sind vorzugsweise Änderungen einer Größe, die charakteristisch für eine Schwingung, insbesondere Körperschwingung, ist, vorzugsweise wobei besagte Größe keine Schalldruckänderung ist. Es kann sich um die Änderung einer Schwingungsamplitude oder Schwingungsfrequenz handeln. Auch die Messung der Anhebung und Absenkung einer Oberfläche kann eine Schwingungsänderung im Sinne der vorliegenden Erfindung sein. Die Größe kann sein oder umfassen, eine Änderung der Schallschnelle, Schallauslenkung, Schallfluss und/oder Schallenergie.

Schall im Sinne der vorliegenden Erfindung ist eine als Welle fortschreitende mechanische Deformation in einem Medium. Es kann sich vorzugsweise um Infraschall mit Frequenzen von kleiner 16 Hz, Hörschall mit Frequenzen von 16 Hz bis 20 kHz, Ultraschall mit Frequenzen von mehr als 20 kHz bis 1,6 GHz oder um Hyperschall mit Frequenzen von mehr als 1,6 GHz handeln, insbesondere Hörschall und/oder Ultraschall. Als besonders geeignet hat sich überraschenderweise ein Sonogramm erwiesen, welches auch den Bereich des Hörschalls umfasst. Die Schwingungs- und/oder Schalldruckänderungen betreffen vorzugsweise die besagten Frequenzbereiche. Das Medium kann beispielsweise Luft oder die Metallwandung des Behälters sein.

Eine Schwingungserzeugungseinrichtung im Sinne der vorliegenden Erfindung ist eine Vorrichtung, welche einen Impuls auf den Behälter, insbesondere eine Behälterwandung des Behälters, ausführen kann. Vorzugsweise wird ein Schlagwerk verwendet. Es kann sich aber auch um einen Lautsprecher handeln. Zahlreiche Ausgestaltungen sind grundsätzlich denkbar, wobei ein elektromagnetisches Schwingungserzeugungseinrichtung, ein Federschlagwerk, ein pneumatisches Schlagwerk, ein Rastenschlagwerk, ein Drehschlagwerk und/oder ein Piezoaktor geeignet sind. Bei dem Impuls handelt es sich vorzugsweise um einen Rechteckimpuls, Alternativ kann für die Schwingungserzeugung auch ein zeitlich entzerrter Impuls, beispielsweise eine Anregung über mehrere zeitlich gestaffelte Frequenzen von z.B. Schallwellen zum Einsatz kommen.

Es ist im Regelfall hinreichend und bevorzugt für die Messung des Füllstandsmessgeräts genau einen Schlag auszuführen, der vorzugsweise vordefiniert und präzise sein sollte. Als besonders zuverlässig hat sich diesbezüglich eine, insbesondere elektromagnetische, Schwingungserzeugungseinrichtung, insbesondere ein elektromagnetisches Schlagwerk, erwiesen, welche einen Hubmagneten und einen Impulshammer oder Impulsbolzen umfasst. Es hat sich gezeigt, dass eine solche Schwingungserzeugungseinrichtung, insbesondere ein solches Schlagwerk, besonders gut reproduzierbare Schläge ausführen kann, welche in wohldefinierten Schwingungs- und/oder Schalldruckänderungen resultieren. Wird eine weniger geeignete Schwingungserzeugungseinrichtung ausgewählt, deren Schläge nicht sehr gut reproduzierbar sind, leidet die Messgenauigkeit des Füllstandsmessgeräts. Mit der hier genannten besonders geeigneten Schwingungserzeugungseinrichtung wird eine vergleichsweise hohe Messgenauigkeit reproduzierbar erzielt. Die Schwingungserzeugungseinrichtung, insbesondere das Schlagwerk, kann ein einer zweckmäßigen Ausgestaltung auch eine Rückstellfeder umfassen, insbesondere um den Impulshammer oder Impulsbolzen in die Ausgangsposition nach einem Schlag zu bewegen.

Vorzugsweise umfasst die vorstehend genannte Schwingungserzeugungseinrichtung, insbesondere das Schlagwerk, einen elektromagnetischen Hubmagneten mit einer Nennspannung von mindestens 3 V, vorzugsweise 6 V, insbesondere bevorzugt mindestens 12 V, ganz besonders bevorzugt mindestens 24 V. Die maximale Nennspannung liegt vorzugsweise unter 100 V, insbesondere unter 48 V, vorzugsweise unter 26 V. Die Leistung der Schwingungserzeugungseinrichtung, insbesondere des Schlagwerks, beträgt vorzugsweise mindestens 10 W, insbesondere 10 bis 20 W. Die vorstehenden Angaben resultieren in einer energiesparenden Schwingungserzeugungseinrichtung, welche gleichwohl hinreichend deutliche Schwingungs- und/oder Schalldruckänderungen für eine genaue Messung des Füllstands erzeugt.

In einer zweckmäßigen Ausgestaltung umfasst die Schwingungserzeugungseinrichtung eine Feder mit einem Exzenter, insbesondere wobei ein Impulshammer oder Impulsbolzen mit dem Exzenter verbunden ist.

Die Maximalkraft der Schwingungserzeugungseinrichtung, insbesondere des Schlagwerks, beträgt vorzugsweise mindestens 5 N, insbesondere mindestens 10 N, insbesondere bevorzugt mindestens 15 N. Vorzugsweise ist die Maximalkraft dabei nicht höher als 100 N, insbesondere nicht höher als 50 N. Besagte Stärken der Schlagkraft haben sich als besonders geeignet erwiesen, um wohldefinierte Schwingungs- und/oder Schalldruckänderungen für eine Messung zu erzeugen und gleichzeitig eine Beschädigung des Behälters zu vermeiden.

Vorzugsweise ist oder umfasst die Schall- und/oder Schwingungserfassungseinrichtung ein Mikrofon, insbesondere Luftschallmikrofon und/oder Kontakt- bzw. Körperschallmikrofon, und/oder einen Beschleunigungssensor zur Messung von Schwingungsänderungen. Die Schall- und/oder Schwingungserfassungseinrichtung kann in einer Ausgestaltung ein Luftschallmikrofon sein oder umfassen, welches vorzugsweise in unmittelbarer Nähe zu der in Schwingung versetzten Behälterwandung montierbar ist. Besagtes Luftschallmikrofon ist dabei in einer zweckmäßigen Ausgestaltung ausgelegt und eingerichtet, den Luftschall aufzunehmen, welcher durch besagte Behälterwandung erzeugt wird. Alternativ oder zusätzlich kann die Schall- und/oder Schwingungserfassungseinrichtung ein Körperschallaufnehmer, insbesondere ein Körperschallmikrofon, umfassen. Vorzugsweise wandelt dieses den Körperschall mit einem Schallwandler in ein analoges elektrisches Signal um. Vorzugsweise werden beim gattungsgemäßen Einsatz des Körperschallaufnehmers Schwingungen der Oberfläche einer Behälterwandung eines Behälters erfasst. Ferner können auch alternative Vorrichtungen, beispielsweise Lasermikrofone oder Beschleunigungssensoren, eingesetzt werden, um die Körperschwingungen bzw. den zeitlichen Verlauf der Körperschwingungen der Behälterwandung, insbesondere Metallwandung, nach erfolgter Schwingungsanregung aufzunehmen.

In einer zweckmäßigen Ausgestaltung ist es vorgesehen, dass das Füllstandsmessgerät einen ersten Energiespeicher, insbesondere eine Batterie, umfasst, welcher dazu ausgelegt und einreichtet ist, die Schwingungserzeugungseinrichtung, die Datenübertragungseinrichtung und/oder die Datenauswerteinrichtung mit Energie zu versorgen. Hierdurch ist es möglich, das Füllstandsmessgerät autonom zu betreiben, insbesondere wenn auch die Daten kabellos übertragen werden. Kabel jeglicher Art können die Messung negativ beeinträchtigen, da Schallschwingungen des Behälters übertragen und gegebenenfalls gedämpft werden. Je nach Lage und Länge des Kabels kann dadurch die Messung der Schwingungsund/oder Schalldruckänderungen verfälscht werden. Es hat sich daher als besonders geeignet erwiesen, ein autonomes Füllstandsmessgerät bereitzustellen.

In einer bevorzugten Variante der vorstehend beschriebenen Ausgestaltung umfasst das Füllstandsmessgerät neben dem ersten Energiespeicher einen zweiten Energiespeicher, welcher vorzugsweise mit dem ersten Energiespeicher und/oder der Schwingungserzeugungseinrichtung verbunden ist, wobei der zweite Energiespeicher ein Kondensator ist. Dies hat den erheblichen Vorteil, dass der erste Energiespeicher eine Batterie/Akku mit geringer Spannung, beispielsweise 3,6V, sein kann. Mittels des zweiten Energiespeichers kann Energie zwischengespeichert und zeitlich begrenzt eine höhere Leistung an das Schwingungserzeugungseinrichtung weitergegeben werden kann. Vorzugsweise ist der zweite Energiespeicher ausgelegt und eingerichtet, Energie vom ersten Energiespeicher aufzunehmen und die Schwingungserzeugungseinrichtung mit Energie zu versorgen, insbesondere bei einer höheren Leistung und/oder Spannung als der erste Energiespeicher bereitstellen kann. Dies erhöht die Stärke der Schläge und ermöglicht es, Batterien mit geringerer Spannung zu verwenden. Hierdurch wird es möglich, trotz der Anforderungen der Schwingungserzeugungseinrichtung, welche vorstehend bereits beschrieben wurden, ein autonomes Füllstandsmessgerät bereitzustellen, insbesondere wobei das Füllstandsmessgerät über mehrere Wochen oder Jahre nicht extern mit Energie versorgt werden muss. In einer bevorzugten Ausgestaltung ist oder umfasst der zweite Energiespeicher einen Kondensator.

In einer Ausgestaltung ist vorgesehen, dass das Füllstandsmessgerät über eine Solarzelle verfügt. Es hat sich überraschenderweise gezeigt, dass mit einer Solarzelle eine erhebliche Verlängerung der Lebensdauer der Batterie und gegebenenfalls sogar eine ausschließliche Energieversorgung über die Solarzelle möglich ist. Vorzugsweise handelt es sich bei der Batterie um eine wieder aufladbare Batterie.

In einer Ausgestaltung kann das Füllstandsmessgerät ein Display umfassen, auf welchem das Ergebnis der vorangehenden Messung anzeigbar ist, insbesondere angezeigt wird. Hierbei kann es sich vorzugsweise um ein LC-Display (liquid crystal display) handeln. Vorzugsweise ist es vorgesehen, dass das Füllstandsmessgerät ein Display umfasst, um den Füllstand wiederzugeben. Das Display kann Bedienknöpfe umfassen. Bei dieser Ausgestaltung ist es besonders bevorzugt, wenn die Berechnung des Füllstands durch die Datenauswerteinrichtung erfolgt. Wenn das Füllstandsmessgerät eine Datenauswerteinrichtung umfasst, können die Ergebnisse der Datenauswertung unmittelbar auf dem Füllstandsmessgerät angezeigt werden, insbesondere über ein LCD, ein OLED oder ein ePaper-Display. Allerdings ist auch eine Berechnung nur durch die Datenempfangseinrichtung möglich, wobei hierfür vorzugsweise der Füllstand direkt oder indirekt von der Datenempfangseinrichtung an das Füllstandsmessgerät übermittelt wird.

In einer geeigneten Ausgestaltung ist es vorgesehen, dass das Füllstandsmessgerät magnetische Befestigungsmittel umfasst, welche ausgelegt und eingerichtet sind, das Füllstandsmessgerät an der Behälterwandung eines Behälters zu befestigen. Obgleich jegliche Art von Befestigungsmittel erfindungsgemäß grundsätzlich denkbar ist, haben sich magnetische Befestigungsmittel besonders bewährt. Ein Nachteil von mechanischen oder klebende Befestigungsmittel ist, dass meist die Behälterwandung des Behälters verändert werden muss, beispielsweise indem Gewindeaussparungen für Schrauben gebohrt werden oder ein irreversibel angebrachter Klebstoff verwendet wird. Während dies zwar oftmals mit relativ geringem Aufwand durchaus möglich ist, kann durch diese Beeinflussung der Behälterwandung eine erhebliche Änderung des Klangbildes eintreten, insbesondere so dass die Schwingungs- und/oder Schalldruckänderungen nicht hinreichend charakteristisch für einen exakten Füllstand sind und die Messung daher weniger genau ist. Beispielsweise kann der Klebstoff dämpfend zwischen dem Messgerät und der Behälterwandung wirken. Überraschenderweise hat sich gezeigt, dass wenn eine magnetische Befestigung gewählt wird, diese Verfälschung nicht auftritt bzw. minimal bleibt. Die Struktur der Behälterwandung wird nicht verändert und das Messgerät steht in direktem Kontakt über den Magneten, welcher insbesondere Körperschall gut leiten kann. Es resultiert eine verbesserte Messgenauigkeit bei der Verwendung einer magnetischen Befestigung.

Vorzugsweise handelt es sich bei der magnetischen Befestigung um einen Haftmagneten, insbesondere einen Permanentmagnet, vorzugsweise umfassend Neodym, Bor, Samarium oder Cobalt. Als besonders geeignet haben sich Seltenerdmagnete, insbesondere umfassend Neodym-Eisen-Bor- oder Samarium-Cobalt-Legierungen, erwiesen. Es hat sich gezeigt, dass besagte Magneten besonders geeignet sind, einen Rückstoß der Schwingungserzeugungseinrichtung, insbesondere des Schlagwerks, abzufangen. Während zahlreiche Magneten für eine Befestigung möglich sind, sind besonders starke Magneten für die Befestigung während einer Impulsanregung der Schwingungserzeugungseinrichtung, insbesondere während eines Schlages des Schlagwerks, bevorzugt, insbesondere bei einem Dauereinsatz und um reproduzierbare Schwingungs- und/oder Schalldruckänderungen zu erhalten.

Vorzugsweise ist es vorgesehen, dass das Füllstandsmessgerät ein Gehäuse umfasst, in welchem sich die Schwingungserzeugungseinrichtung, die Schall- und/oder Schwingungserfassungseinrichtung und die Datenübertragungseinrichtung und/oder die Datenauswerteinrichtung vollständig oder teilweise befinden. Insbesondere bei der Schwingungserzeugungseinrichtung, vorzugsweise dem Schlagwerk, wird zumindest der ggf. vorhandene Impulshammer oder Impulsbolzen aus dem Gehäuse austreten oder austreten können, um den Schlag auszuführen. Besagtes Gehäuse ermöglicht eine besonders einfache Anbringung, insbesondere wobei die vorstehend genannten Befestigungsmittel außen an dem Gehäuse angebracht sind und/oder durch eine Behälterwandung des Gehäuses hindurchragen. Beispielsweise kann das Gehäuse mittels Magnetkraft befestigt werden, ohne dass die übrigen Gerätschaften gesondert befestigt werden müssen. Insbesondere hat sich gezeigt, dass auf diesem Wege besonders robuste und zuverlässige Füllstandsmessgeräte erhalten werden, welche wenig störanfällig sind. Vorzugsweise umfasst das Gehäuse eine Öffnung für den Impulshammer oder Impulsbolzen der Schwingungserzeugungseinrichtung, vorzugweise des Schlagwerks, insbesondere eine Öffnung an einem Gehäuseboden, welcher auch die Befestigungsmittel umfasst. Durch eine Kombination von Gehäuse und Haftmagneten ist auch eine besonders einfache Nachrüstung herkömmlicher Behälter möglich.

Die Erfindung betrifft ferner ein Kit aus einem Behälter, insbesondre Silo, und mindestens einem Füllstandsmessgerät, wie es vorstehend beschrieben wurde, wobei der Behälter mindestens eine Behälterwandung insbesondere Metallwandung, umfasst und das mindestens eine Füllstandsmessgerät an dieser Behälterwandung befestigt ist. Hierbei kann es sich um einen Behälter handeln, in welchen das Füllstandsmessgerät baulich integriert ist. Beispielsweise kann die Behälterwandung einer Aufnahme für das Füllstandsmessgerät aufweisen. Grundsätzlich ist es auch denkbar, mehrere Füllstandsmessgeräte in mehrere solcher Aufnahmen unterzubringen, was die Messgenauigkeit verbessert. Vorzugsweise ist es jedoch vorgesehen, dass der Behälter lösbar mit dem mindestens einen Füllstandsmessgerät verbunden ist, insbesondere mittels Magnetkraft, wobei keine besondere bauliche Ausgestaltung des Behälters hierfür erforderlich ist. Dies hat den Vorteil, dass das Füllstandsmessgerät bzw. die Füllstandsmessgeräte frei positioniert werden können. Falls eine Position nicht optimal ist, um geeignete Schwingungs- und/oder Schalldruckänderungen zu erzeugen, kann die Position ohne weiteres an dem Behälter geändert werden.

Vorzugsweise ist es bei sämtlichen Wandungen von Behältern, insbesondere Behälterwandungen von Silos, im Sinne dieser Druckschrift vorgesehen, dass es sich um Metallwandungen handelt, d.h. Wandungen die Metalle umfassen, vorzugsweise vollständig oder zumindest überwiegend aus Metall gebildet sind.

In einer besonders bevorzugten Ausgestaltung umfasst das Kit mindestens zwei Füllstandsmessgeräte, welche beabstandet voneinander an dem Behälter angeordnet sind. Es hat sich gezeigt, dass das Signal positionsabhängig ist und Signale für verschiedene Positionen eine deutlich präzisere Messung ermöglichen.

Vorzugsweise umfasst das Kit aus Behälter und Füllstandsmessgerät einen Behälter in Form eines, insbesondere zylindrischen, Hochsilos, vorzugsweise eines Silos bzw. Hochsilos zumindest partiell insbesondere vollständig gebildet aus einer Metallwandung. Die Messung ist bei Hochsilos besonders zuverlässig, was möglicherweise darauf zurückzuführen ist, dass diese besser in Schwingung versetzbar sind.

In einer Ausgestaltung ist es vorgesehen, dass das Füllstandsmessgerät lösbar an dem Behälter fixiert ist, insbesondere in einem zylindrischen Bereich des Behälters. Es hat sich überraschenderweise gezeigt, dass Schwingungs- und/oder Schalldruckänderungen, welche in solchen zylindrischen Bereich erzeugt werden, repräsentativer für den Füllstand als Schwingungs- und/oder Schalldruckänderungen aus anderen Bereichen sind.

Ferner ist es in einer Ausgestaltung vorgesehen, dass der Behälter Schüttgut umfasst. Es ist zwar auch die Bestimmung anderer Füllgüter, beispielsweise der Menge einer Flüssigkeit, möglich, aber das Messgerät ist besonders geeignet für eine exakte Bestimmung von Schüttgütern.

Gegenstand der vorliegenden Erfindung ist ferner, ein Verfahren für die Bestimmung des Füllstands eines Behälters mit mindestens einem Füllstandsmessgerät, insbesondere wie dies vorstehend beschrieben wurde, wobei das mindestens eine Füllstandsmessgerät eine Schwingungserzeugungseinrichtung, eine Schall- und/oder Schwingungserfassungseinrichtung und eine Datenübertragungseinrichtung und/oder eine Datenauswerteinrichtung umfasst, insbesondere das vorstehend beschriebenen Füllstandsmessgerät, die vorstehend beschriebene Schwingungserzeugungseinrichtung, und die vorstehend beschriebene Schallund/oder Schwingungserfassungseinrichtung, wobei das Verfahren die folgenden Schritte, insbesondere in dieser Reihenfolge, aufweist
a) Schlaganregung einer Behälterwandung des Behälters durch mindestens einen Schlag der Schwingungserzeugungseinrichtung, wobei der mindestens eine Schlag Schwingungs- und/oder Schalldruckänderungen, insbesondere in der Luft und/oder in der Behälterwandung erzeugt,
b) Messung der besagten Schwingungs- und/oder Schalldruckänderungen, insbesondere der Luft und/oder der Behälterwandung, mit der Schall- und/oder Schwingungserfassungseinrichtung, insbesondere mit einem Mikrophon und/oder einem Beschleunigungssensor, unter Erzeugung von analogen und/oder digitalen Signalen, insbesondere wobei die erzeugten analogen und/oder digitalen Signalen an die Datenübertragungseinrichtung, vorzugsweise über ein Kabel, übertragen werden,
c) Übertragung der analogen und/oder digitalen Signale durch die Datenübertragungseinrichtung, insbesondere drahtlos, an eine von dem mindestens einen Füllstandsmessgerät beabstandete Datenempfangseinrichtung und/oder Übertragung der analogen und/oder digitalen Signale an die Datenauswerteinrichtung des mindestens einen Füllstandsmessgeräts,
d) Berechnung eines Füllstands basierend auf den analogen und/oder digitalen Signalen durch die Datenempfangseinrichtung und/oder die Datenauswerteinrichtung.

Es hat sich überraschenderweise gezeigt, dass mithilfe des vorstehenden Verfahrens eine besonders einfache und robuste Bestimmung der Menge von Schüttgut ermöglicht wird. Überraschenderweise sind die Schwingungs- und/oder Schalldruckänderungen hochcharakteristisch für spezifische Füllstände bei einem vorbekannten Füllgut.

Eine Datenempfangseinrichtung im Sinne der vorliegenden Erfindung ist vorzugsweise eine Datenverarbeitungseinrichtung, welche ausgelegt und eingerichtet ist, basierend auf den analogen und/oder digitalen Signalen, einen Füllstand zu berechnen und die kein Bestandteil des Füllstandsmessgeräts ist, insbesondere beabstandet von diesem angeordnet ist, vorzugsweise ein externer Computer, insbesondere ein externer Server, ein Laptop oder ein Mobiltelefon. Eine Datenauswerteinrichtung im Sinne der vorliegenden Erfindung ist vorzugsweise eine Datenverarbeitungseinrichtung, welche ausgelegt und eingerichtet ist, basierend auf den analogen und/oder digitalen Signalen einen Füllstand zu berechnen und welche Bestandteil des Füllstandsmessgeräts ist. Vorzugsweise umfasst die Datenverarbeitungseinrichtung hierfür Referenzwerte der Schwingungs- und/oder Schalldruckänderungen, insbesondere Referenzsonogramme, wobei unter Sonogrammen im Sinne der Erfindung Schall-Spektrogramme verstanden werden.

Die Übertragung der analogen und/oder digitalen Signale durch die Datenübertragungseinrichtung, insbesondere drahtlos, an eine von dem mindestens einen Füllstandsmessgerät beabstandete Datenempfangseinrichtung, kann mittelbar oder unmittelbar erfolgen. Bei der unmittelbaren Übertragung werden die analogen und/oder digitalen Signale drahtlos oder drahtgebunden, vorzugsweise drahtlos, direkt an die Datenempfangseinrichtung übermittelt. Bei der mittelbaren Übertragung können eine oder mehrere Zwischenübertragungseinrichtungen vorgesehen sein. Beispielsweise kann eine Übertragung, insbesondere durch W-LAN, Bluetooth, Zigbee, wM-Bus, NB-IoT, LoRa oder Infrarot, an einem Gateway erfolgen, welches die Daten über das Internet an einen Server als Datenempfangseinrichtung weiterleitet. Der Begriff "Übertragung" ist im Sinne der vorliegenden Erfindung ein Oberbegriff für besagte mittelbare Übertragung und unmittelbare Übertragung, wobei es sich vorzugsweise um eine unmittelbare Übertragung handelt, falls dies nicht explizit anderweitig festgelegt ist.

Wenn von der Behälterwandung im Sinne der vorliegenden Erfindung gesprochen wird, handelt es sich vorzugsweise um die Außenseite der Behälterwandung, d.h. das Füllstandsmessgerät wird vorzugsweise außen und nicht innen am Behälter angebracht. Eine Behälterwandung kann im Sinne der vorliegenden Erfindung einteilig oder mehrteilig ausgestaltet sein. In einer Ausgestaltung kann der gesamte Innenraum durch eine Behälterwandung umschlossen sein. Besonderes bevorzugt ist jedoch eine zylindrische Behälterwandung des Behälters, welche Seitenwandungen ausbildet, insbesondere wobei sich an die zylindrische Behälterwandung ein Dach und ein gegenüberliegender Boden mittelbar oder unmittelbar anschließt. Vorzugsweise handelt es sich um eine Seitenwandung, insbesondere eine im Wesentlichen vertikale Seitenwandung des Behälters. Die Behälterwandung kann Ecken und Kanten haben.

In einer Ausgestaltung ist eine drahtlose unmittelbare Übertragung an ein Gateway und/oder Mobilgerät, insbesondere ein Telefon und/oder ein Laptop, als Datenempfangseinrichtung vorgesehen, welches eine Software umfasst, die die Datenauswertung vornimmt. Dies hat den Vorteil, dass ein leistungsschwache und energiesparende Datenübertragungseinrichtung verwendet werden kann, da das Mobilgerät in die Nähe der Datenübertragungseinrichtung bewegt werden kann, um eine Datenübertragung zu ermöglichen.

In einer geeigneten Ausgestaltung des vorstehend genannten Verfahrens ist es vorgesehen, dass die Berechnung des Füllstands auch auf Basis von analogen und/oder digitalen Signalen von Schwingungs- und/oder Schalldruckänderungen des ruhenden Silos erfolgt, wobei die analogen und/oder digitalen Signalen mit der Schall- und/oder Schwingungserfassungseinrichtung gemessen und durch die Datenübertragungseinrichtung an die vom Füllstandsmessgerät beabstandete Datenempfangseinrichtung übertragen werden und/oder an die Datenauswerteinrichtung des Füllstandsmessgeräts übertragen werden. Es hat sich gezeigt, dass durch Messungen der Geräusche eines ruhenden Silos präzisere Werte erhalten werden, in dem dieses Hintergrundrauschen vom tatsächlichen Messsignal abgezogen wird. Ein ruhendes Silo im Sinne der Erfindung ist ein Silo, welches nicht durch Schläge, insbesondere der Schwingungserzeugungseinrichtung, angeregt wurde oder bei welchem die Anregung eines solchen Schlags bereits weitgehend oder vollständig abgeklungen ist. Hierbei konnte festgestellt werden, dass die besagten Schwingungen des ruhenden Silos hinreichend konstant sind, um eine solche Hintergrundmessung durchführen zu können. Demnach wird hierdurch eine höhere Präzision bei der Bestimmung der Menge an Füllgut erreicht.

In einer zweckmäßigen Ausgestaltung des Verfahrens ist es vorgesehen, dass der vorstehende Behälter oder ein, vorzugsweise baugleicher, Referenzbehälter mit verschiedenen Füllständen gefüllt wird, wobei für jeden dieser Füllstände die durch eine Schlaganregung erzeugten Schwingungs- und/oder Schalldruckänderungen gemessen werden, insbesondere mit dem Messgerät, so dass analogen und/oder digitalen Referenzsignale erhalten werden, wobei in Schritt d) die Berechnung eines Füllstands auch auf Basis der analogen und/oder digitalen Referenzsignale erfolgt. Akkuratere Referenzsignale werden erhalten, indem genau derselbe Behälter zur Bestimmung der Referenzsignale genutzt wird, welcher anschließend den Messungen zu Grunde liegt. Allerdings hat sich überraschenderweise gezeigt, dass Referenzsignale auch mit, insbesondere baugleichen, Referenzbehältern bestimmt werden können. Auch baugleiche Referenzbehälter sind nicht 100-prozentig identisch, sondern weisen herstellungs-, installations- und/oder alterungsbedingte Unterschiede auf. Obgleich die Ausbreitung von Schallwellen von solchen Unterschieden durchaus in erheblichem Maße beeinflusst werden kann, hat sich überraschenderweise gezeigt, dass die Referenzsignale von anderen, insbesondere baugleichen, Referenzbehältern genutzt werden können, um die Füllmenge bei einem Behälter ohne solche Referenzsignale zu bestimmen und dass die so bestimmten Werte trotzdem eine hohe Genauigkeit aufweisen. Insbesondere ist es hierbei bevorzugt, dass die Füllstandsmessgeräte an jeweils gleichen Positionen angebracht werden, d.h. falls ein Füllstandsmessgerät mittig an dem Behälter befestigt wird, sollte es auch mittig bei der Referenzmessung an dem Behälter oder an dem, insbesondere baugleichen, Referenzbehälter befestigt werden.

Alternativ oder zusätzlich können Simulationen verwendet werden, um Referenzsignale zu berechnen. Die Anzahl der vorstehend beschriebenen Messungen ist begrenzt, während Simulationen sich als geeignet erwiesen haben, Zwischenwerte zu berechnen. Es hat sich ferner gezeigt, dass Simulationen auch geeignet sind, bauliche Abweichungen zwischen dem Referenzbehälter und dem Behälter, an welchem die Messung durchzuführen ist, zu berücksichtigen. Mit besagten Simulationen werden vorzugsweise Spannungen, Deformationen und Vibrationen des physischen Behälters, insbesondere der physischen Behälterwandung, in einem virtuellen Behälter, insbesondere einer virtuellen Behälterwandung, simuliert, um zu besagten Referenzsignalen zu gelangen.

In einer Ausgestaltung ist es vorgesehen, dass die Berechnung des Schritts d) unter Verwendung eines künstlichen neuronalen Netzwerks erfolgt. Es hat sich überraschenderweise gezeigt, dass besagte künstliche neuronale Netzwerke besonders geeignet sind, Korrelationen zwischen den Füllständen und den analogen und/oder digitalen Signalen zu erkennen.

Die analogen und/oder digitalen Signale sind vorzugsweise elektrische Spannungsänderungen in Form von Mikrofonsignalen oder durch Umwandlung entstanden digitalen Signalen derselben und/oder ein digitaler Audiostrom. Es kann sich auch um digitale Signale in Form von bearbeiteten Messdaten handeln, welche Informationen über die gemessenen Schwingungs- und/oder Schalldruckänderungen umfassen. Jegliche Art von Messdaten, die besagte Schwingungs- und/oder Schalldruckänderungen betreffen, insbesondere geeignet sind diese in ein Sonogramm umzuwandeln, können analoge und/oder digitale Signale im Sinne der Erfindung sein.

Vorzugsweise werden die Schwingungs- und/oder Schalldruckänderungen des Körperschalls in der Behälterwandung bestimmt. Hierbei wurde eine hohe Präzision der Füllmengenbestimmung ermittelt. Auch stört Lärm am Aufstellungsort sehr viel weniger, da der Luftschall nur einen geringen Einfluss hat.

Alternativ kann vorzugsweise der Luftschall bestimmt werden. Dies hat erhebliche Vorteile, da der Ort der Anbringung weniger bedeutsam ist. Beispielsweise kann ein Schwingungsknoten am Ort der Anbringung eine Körperschallmessung erschweren oder verfälschen, wobei eine Luftschallmessung dort weiterhin ermöglicht wird.

In einer besonders bevorzugten Ausgestaltung werden Körperschall und Luftschall gemessen, wobei so besonderes präzise Werte für die Füllmengen erhalten werden. Überraschenderweise sind die Datensätze nicht redundant und durch die Doppelmessung werden präzisere Werte erhalten. Auch eine interne Korrektur eine Fehlmessung wird erleichtert. Wenn der Luftschall einem ersten Füllstand entspricht und der Körperschall einem zweiten Füllstand entspricht und der erste Füllstand und zweiten Füllstand erheblich voneinander abweichen, kann davon ausgegangen werden, dass bei einer der beiden Messungen eine Störung aufgetreten ist. In diesem Fall kann das Verfahren eine Rekalibrierung und/oder eine erneute Messung vorsehen.

Vorzugsweise werden die Schwingungs- und/oder Schalldruckänderungen genutzt, um den Füllstand zu bestimmen, wobei die Art des Füllguts hinreichend bekannt ist, beispielsweise anorganische Baustoffmaterialien oder landwirtschaftliches Füllgut wie Silage. In der Praxis ergibt sich selten das Problem, dass auch die Art des Füllguts oder dessen Zusammensetzung bestimmt werden muss. Allerdings hat sich überraschenderweise gezeigt, dass die Art des Füllguts und/oder dessen Zusammensetzung auch mit dem beschriebenen Verfahren bestimmt werden kann. Hierfür sollte eine Auswahl der möglichen Füllgüter und Inhaltsstoffe bekannt sein, was im Regelfall kein Problem darstellt. Für diese Auswahl werden Referenzwerte bestimmt und mit besagten Referenzwerten eine Zuordnung getroffen. Die Referenzwerte können beispielsweise wie vorstehend beschrieben bestimmt werden, wobei der Behälter oder ein Referenzspeicher mit den unterschiedlichen Füllgütern und Inhaltsstoffen befüllt und die damit verbundenen Schalldrückänderungen bei Anregung gemessen werden.

In einer besonders geeigneten Ausgestaltung des Verfahrens ist es vorgesehen, dass das mindestens eine Füllstandsmessgerät mindestens einen Haftmagneten umfasst, wobei der Schritt a) in die Schritte a1) und a2) unterteilt ist:
a1) Fixierung des Füllstandsmessgeräts an dem Behälter mittels mindestens eines Haftmagneten,
a2) Befestigung der Schlaganregung einer Behälterwandung des Behälters durch mindestens einen Schlag der Schwingungserzeugungseinrichtung, insbesondere des Schlagwerks, wobei der mindestens eine Schlag Schwingungs- und/oder Schalldruckänderungen erzeugt.

Die Vorteile einer solchen magnetischen Befestigung wurden bereits eingangs erläutert. Die Schritte a1) und a2) ersetzen in diesem Fall den Schritt a).

Vorzugsweise ist es vorgesehen, dass das Füllstandsmessgerät über einen ersten und zweiten Energiespeicher verfügt und in Schritt c) die Übertragung der analogen und/oder digitalen Signale durch die Datenübertragungseinrichtung drahtlos an eine von dem mindestens einen Füllstandsmessgerät beabstandete Datenempfangseinrichtung erfolgt. Durch die Kombination eines ersten mit einem zweiten Energiespeicher, insbesondere einem ersten und einem zweiten Energiespeicher, wie diese eingangs in Verbindung mit dem Füllstandsmessgerät beschrieben wurden, wird eine besonders energiesparende Konstruktion ermöglicht, welche keine kabelgebundene Stromzufuhr benötigt. Somit kann es zwar grundsätzlich vorgesehen sein, dass ein Kabel anschließbar ist, allerdings kommt das Füllstandsmessgerät auch mit seinem Energiespeicher längere Zeit ohne eine externe Stromzufuhr aus. Hinsichtlich des ersten und zweiten Energiespeichers sei ebenfalls auf die eingangs erfolgten Ausführungen verwiesen. Wenn nun hiermit eine drahtlose Datenübertragungseinrichtung kombiniert wird, kann ein autonomes System erhalten werden.

Die Erfindung betrifft ferner die Verwendung des Füllstandsmessgeräts für die Bestimmung der Menge an Füllgut eines Behälters. Insbesondere betrifft die die Verwendung mindestens eines Füllstandsmessgeräts für die Bestimmung der Menge an Schüttgut in einem Silo mit mindestens einer Metallwandung des Silos, insbesondere unter Anbringung des mindestens einen Füllstandsmessgeräts an der Metallwandung, vorzugsweise unter Anbringung von mindestens zwei Füllstandsmessgeräten.

Die vorliegende Erfindung zeichnet sich dadurch aus, dass erkannt wurde, dass mit den geeigneten und vorstehend beschriebenen Ausgestaltungen des Füllstandsmessgeräts und mit dem beschriebenen Verfahren eine robuste, exakte, kostengünstige, zuverlässige und genaue Bestimmung des Füllstandes ermöglicht wird. Auch müssen bestehende Behälter nicht aufwändig umgebaut werden, sondern die Erfindung lässt sich auch mit herkömmlichen Behältern einfach und zuverlässig kombinieren. Bisherige Lösungen haben sich demgegenüber als unterlegen erwiesen.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

Dabei zeigt:
- Figur 1: eine perspektivische Ansicht einer ersten Ausführungsform des Füllstandsmessgeräts mit geöffnetem Gehäuse und einer Datenübertragungseinrichtung;
- Figur 2: eine perspektivische Ansicht einer zweiten Ausführungsform des Füllstandsmessgeräts mit geöffnetem Gehäuse und einer Datenauswerteinrichtung;
- Figur 3: eine schematische Seitenansicht der Ausführungsform der Abdeckung des Gehäuses eines Füllstandsmessgeräts mit einem Display;
- Figur 4: eine schematische Seitenansicht eines Kit aus Behälter und genau einem Füllstandsmessgerät;
- Figur 5: eine schematische Seitenansicht eines Kit aus Behälter und mehreren Füllstandsmessgeräten;
- Figur 6: ein Schema des Verfahren für die Bestimmung des Füllstands eines Behälters;
- Figur 7: eine mögliche Kommunikationsanordnung im Sinne des erfindungsgemäßen Verfahrens; und
- Figur 8: eine alternative mögliche Kommunikationsanordnung im Sinne des erfindungsgemäßen Verfahrens.

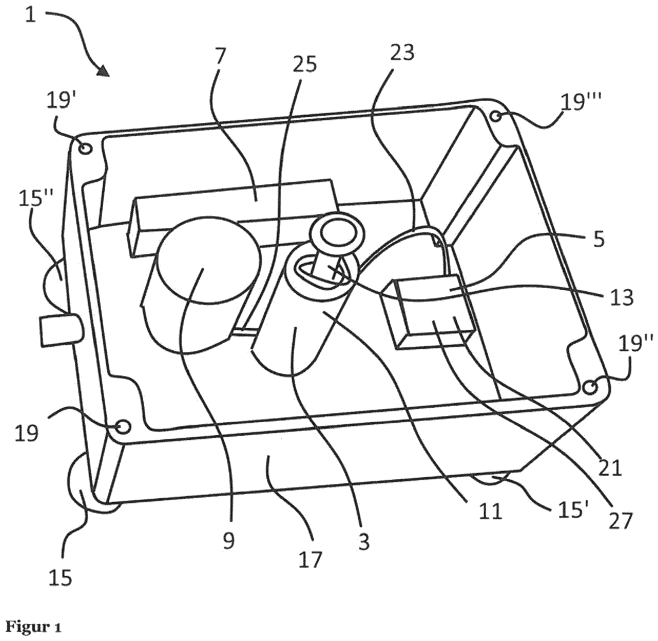

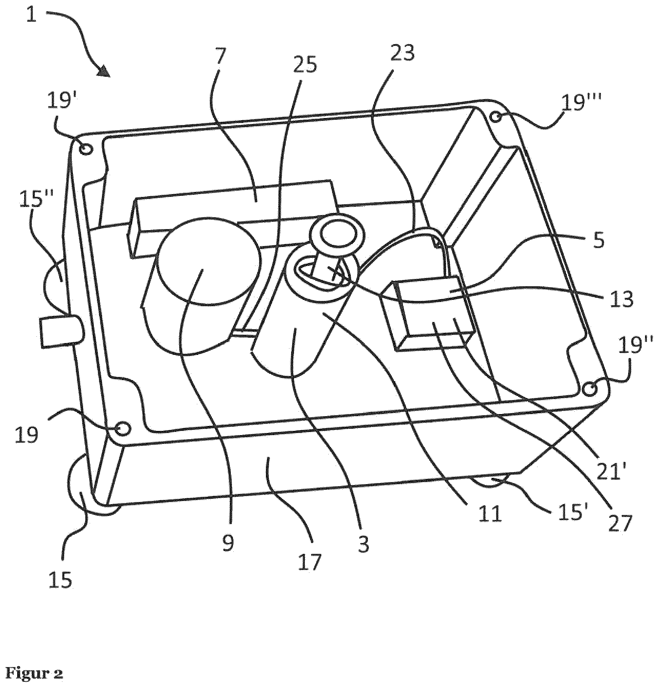

Figur 1 zeigt eine Ausführungsform des Füllstandsmessgeräts 1 zur Bestimmung des Füllstands eines Behälters, umfassend eine Schwingungserzeugungseinrichtung 3 in Form eines Schlagwerks, eine Schallerfassungseinrichtung 5 und eine Datenübertragungseinrichtung 21, wobei besagte Schallerfassungseinrichtung 5 und die Datenübertragungseinrichtung 21 in einem Kontrollmodul 27 anordnet sind. Ferner ist das Füllstandsmessgerät 1 ausgelegt und eingerichtet, mit der Schwingungserzeugungseinrichtung 3 an einer Behälterwandung eines Behälters (nicht gezeigt, vgl. Abbildung 2) Schwingungs- und/oder Schalldruckänderungen zu erzeugen, wobei die Schallerfassungseinrichtung 5 ausgelegt und eingerichtet ist, diese Schwingungs- und/oder Schalldruckänderungen zu erfassen und in analoge und/oder digitale Signale umzuwandeln, wobei die Datenübertragungseinrichtung 21 ausgelegt und eingerichtet ist, die analogen und/oder digitalen Signale zu übertragen. Figur 1 zeigt ferner das Unterteil eines Gehäuses 17 ohne die Abdeckung, um den Innenraum besser wiederzugeben, in welchem sich die Schwingungserzeugungseinrichtung 3, die Schallerfassungseinrichtung 5 und die Datenübertragungseinrichtung 21 befinden. Besagte nicht gezeigte Abdeckung kann mit Schrauben in Gewindeaussparungen 19, 19', 19", 19''' am Unterteil des Gehäuses 17 befestigt werden. Weiterhin umfasst das Füllstandsmessgerät 1 einen ersten Energiespeicher 7 in Form einer Batterie, welche dazu ausgelegt und einreichtet ist, die Schwingungserzeugungseinrichtung 3 indirekt über einen zwischengeschaltete zweiten Energiespeicher 9 und die Datenübertragungseinrichtung 21 mit Energie zu versorgen. Der zweite Energiespeicher 9 ist mit dem ersten Energiespeicher 7 und der Schwingungserzeugungseinrichtung 3 verbunden, wobei der zweite Energiespeicher 9 ein Kondensator ist und/oder ausgelegt und eingerichtet ist, Energie vom ersten Energiespeicher 7 aufzunehmen und die Schwingungserzeugungseinrichtung 3 mit Energie zu versorgen, insbesondere bei einer höheren Leistung und/oder Spannung als der erste Energiespeicher 7 bereitstellen kann. Vorliegend umfasst das Füllstandsmessgerät magnetische Befestigungsmittel 15, 15', 15", welche ausgelegt und eingerichtet sind, das Füllstandsmessgerät an der Behälterwandung eines Behälters zu befestigen. Der zweite Energiespeicher und die Schwingungserzeugungseinrichtung sind hierfür über ein Stromkabel 25 miteinander verbunden. Die Schwingungserzeugungseinrichtung ist ferner über ein Datenkabel 23 mit dem Kontrollmodul 27 verbunden, wobei das Kontrollmodul 27 die Schwingungserzeugungseinrichtung steuert. Die Schwingungserzeugungseinrichtung 3 umfasst einen Hubmagneten 11 und einen Impulshammer oder Impulsbolzen 13.

Figur 2 zeigt ein Füllstandsmessgerät 1, welches weitgehend analog zur Ausführungsform der Figur 1 aufgebaut ist. Bezüglich der Referenzziffern sei daher auf Figur 1 verwiesen. Die Ausführungsform der Figur 2 unterscheidet sich von Figur 1 darin, dass statt der Datenübertragungseinrichtung 21 eine Datenauswerteinrichtung 21' verbaut wurde. Die Datenauswerteinrichtung 21' berechnet innerhalb des Füllstandsmessgeräts 1 einen Füllstand. Diese kann grundsätzlich an andere Geräte, beispielsweise ein Smartphone versendet werden. Auch ist es denkbar, dass das Füllstandsmessgerät 1 ein Display zur Wiedergabe des Füllstands umfasst.

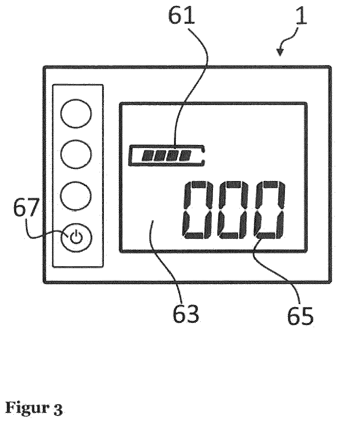

Figur 3 zeigt die Außenansicht eines Füllstandsmessgeräts 1 mit einem Display 63. Das Füllstandsmessgeräts 1 Display kann Bedienknöpfe 67 umfassen. Vorliegend wird der Ladezustand 61 der Batterie und der Menge 65 an Füllgut auf dem Display angezeigt. Die Menge an Füllgut kann als Gewicht und/oder Volumen und/oder prozentualer Wert und/oder Bruchteil oder sonst. Füllgradangabe (Grafik) wiedergegeben werden, wobei sich die Werte bei bekannter Dichte des Füllguts mittels einer Datenauswerteinrichtung umrechnen lassen.

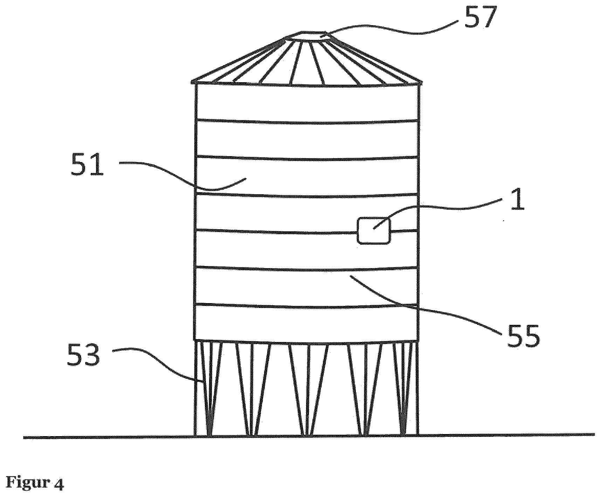

Figur 4 zeigt genau ein Füllstandsmessgerät 1, welches an einem Behälter 51 befestigt ist, wobei das Füllstandsmessgerät ausgelegt und eingerichtet ist, mit einer Schwingungserzeugungseinrichtung an einer Behälterwandung 55 des Behälters 51 Schwingungs- und/oder Schalldruckänderungen zu erzeugen. Der Behälter steht auf Stützen 53 und umfasst ein kegelförmiges oberes Ende 57. Zwischen besagten Stützen und dem kegelförmigen oberen Ende ist die Behälterwandung 55 zylindrisch ausgestaltet.

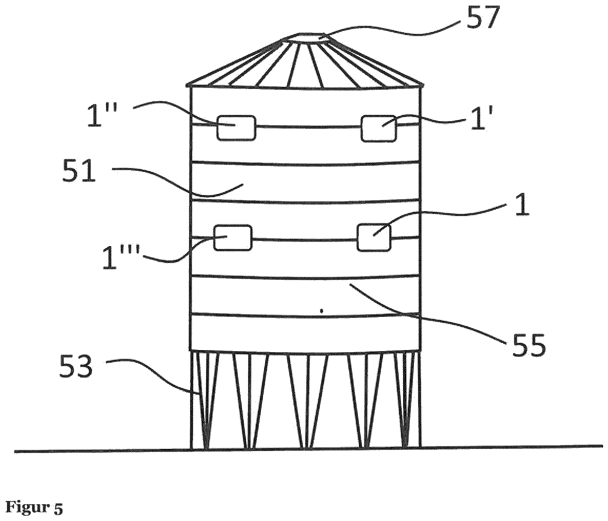

Figur 5 zeigt vier Füllstandsmessgeräte 1, 1', 1", 1''', welche an einem Behälter 51 befestigt sind, wobei die besagten Füllstandsmessgeräte ausgelegt und eingerichtet sind, mit jeweils einer Schwingungserzeugungseinrichtung an einer Behälterwandung 55 des Behälters 51 Schwingungs- und/oder Schalldruckänderungen zu erzeugen. Auch dieser Behälter steht auf Stützen 53 und umfasst ein kegelförmiges oberes Ende 57. Zwischen besagten Stützen und dem kegelförmigen oberen Ende ist die Behälterwandung 55 zylindrisch ausgestaltet. Mit den vier Füllstandsmessgeräten 1, 1', 1", 1'" an einem Behälter wird eine präzisere Erfassung der Schwingungs- und/oder Schalldruckänderungen ermöglicht, so dass Störungen besser kompensiert werden können und eine exaktere Bestimmung der Füllmenge erfolgt.

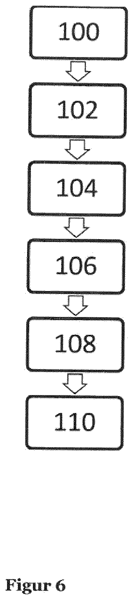

Figur 6 zeigt beispielhaft ein Verfahren für die Bestimmung des Füllstands eines Behälters mit mindestens einem Füllstandsmessgerät, wobei das Verfahren die folgenden Schritte aufweist: Fixierung 100 des Füllstandsmessgeräts an dem Behälter mittels mindestens eines Haftmagneten; Schlaganregung 102 einer Behälterwandung des Behälters durch mindestens einen Schlag der Schwingungserzeugungseinrichtung, wobei der mindestens eine Schlag Schwingungs- und/oder Schalldruckänderungen erzeugt; Messung 104 der besagten Schwingungs- und/oder Schalldruckänderungen mit der Schallerfassungseinrichtung, insbesondere mit dem Schlagwerk, und Umwandung 106 der Schwingungs- und/oder Schalldruckänderungen in analoge und/oder digitale Signale; drahtlose Übertragung 108 der analogen und/oder digitalen Signale durch die Datenübertragungseinrichtung an eine von dem mindestens einen Füllstandsmessgerät beabstandete Datenempfangseinrichtung; Berechnung 110 eines Füllstands basierend auf den analogen und/oder digitalen Signalen durch die Datenempfangseinrichtung.

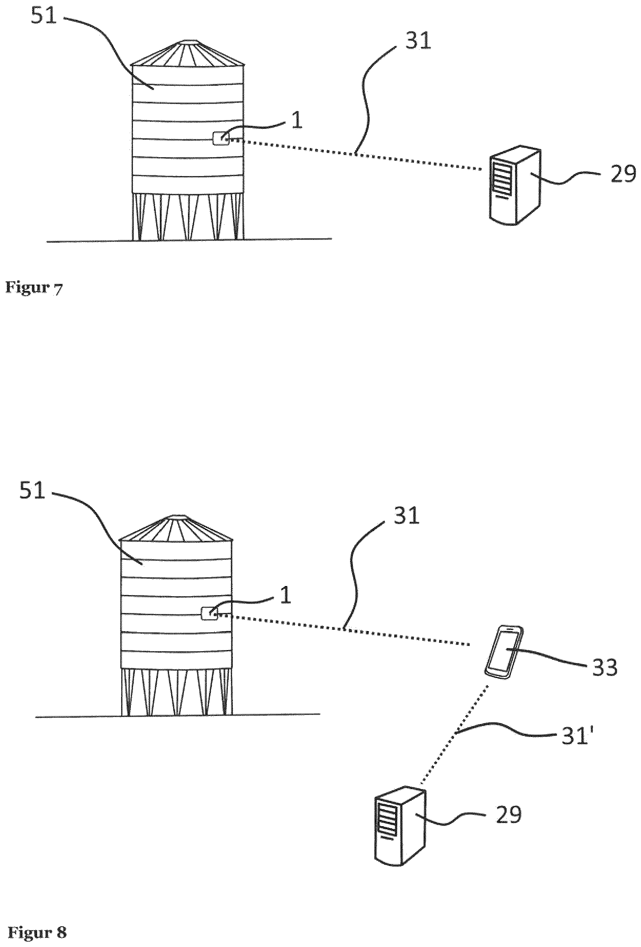

Figur 7 zeigt einen Behälter 51 mit dem anhaftenden Füllstandsmessgerät 1, wobei dieses Füllstandsmessgerät 1 über eine Datenübertragungseinrichtung mit einer Datenempfangseinrichtung 29 über einen drahtlosen Verbindungsweg 31 unmittelbar in Kontakt steht.

Figur 8 zeigt einen Behälter 51 mit dem anhaftenden Füllstandsmessgerät 1, wobei dieses Füllstandsmessgerät 1 über eine Datenübertragungseinrichtung mit einer Datenempfangseinrichtung 29 über einen drahtlosen Verbindungsweg 33, 35 mittelbar in Kontakt steht. Die Datenübertragungseinrichtung kontaktiert über einen über einen unmittelbaren drahtlosen Verbindungsweg 33 ein Mobiltelefon 37, wobei das Mobiltelefon 37 über einen weiteren unmittelbaren drahtlosen Verbindungsweg 35 die Datenempfangseinrichtung 29 kontaktiert.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Füllstandsmessgerät (1) für die Bestimmung der Menge an Schüttgut in einem Behälter (51) mit einer Behälterwandung, umfassend
eine Schwingungserzeugungseinrichtung (3), eine Schall- und/oder Schwingungserfassungseinrichtung (5) und eine Datenübertragungseinrichtung (21) und/oder eine Datenauswerteinrichtung (21'),
wobei das Füllstandsmessgerät (1) ausgelegt und eingerichtet ist, mit der Schwingungserzeugungseinrichtung (3) an der Behälterwandung des Behälters (51) Schwingungs- und/oder Schalldruckänderungen zu erzeugen,
wobei die Schall- und/oder Schwingungserfassungseinrichtung (5) ausgelegt und eingerichtet ist, diese Schwingungs- und/oder Schalldruckänderungen zu erfassen und in analoge und/oder digitale Signale umzuwandeln,
wobei die Datenübertragungseinrichtung (21) ausgelegt und eingerichtet ist, die analogen und/oder digitalen Signale zu übertragen und/oder wobei die Datenauswerteinrichtung (21') ausgelegt und eingerichtet ist, die analogen und/oder digitalen Signale zu verarbeiten und einen Füllstand zu berechnen,
wobei das Füllstandsmessgerät (1) eine magnetische Befestigung, insbesondere mindestens einen Haftmagneten, umfasst und der Behälter ein Silo ist.

2. Füllstandsmessgerät (1) nach Anspruch 1, **dadurch gekennzeichnet, dass** das Füllstandsmessgerät (1) einen ersten Energiespeicher, insbesondere eine Batterie, umfasst, welcher dazu ausgelegt und einreichtet ist, die Schwingungserzeugungseinrichtung (3), die Datenübertragungseinrichtung (21) und/oder die Datenauswerteinrichtung (21') mit Energie zu versorgen.

3. Füllstandsmessgerät (1) nach Anspruch 2, **dadurch gekennzeichnet, dass** das Füllstandsmessgerät (1) einen zweiten Energiespeicher (9) umfasst, welcher mit dem ersten Energiespeicher (7) und der Schwingungserzeugungseinrichtung (3) verbunden ist, wobei der zweite Energiespeicher (9) ein Kondensator ist und/oder ausgelegt und eingerichtet ist, Energie vom ersten Energiespeicher (7) aufzunehmen und die Schwingungserzeugungseinrichtung (3) mit Energie zu versorgen, insbesondere bei einer höheren Leistung und/oder Spannung als durch den ersten Energiespeicher (7) maximal bereitstellbar ist.

4. Füllstandsmessgerät (1) nach einem der vorangehenden Ansprüche, **dadurch gekennzeichnet, dass**
die Schwingungserzeugungseinrichtung (3) ein Schlagwerk mit einem Hubmagneten (11) und einem Impulshammer oder Impulsbolzen (13) umfasst, insbesondere einen Hubmagneten (11) mit einer Nennspannung von mindestens 10 V und/oder einer Leistung von mindestens 8 W.

5. Füllstandsmessgerät (1) nach einem der vorangehenden Ansprüche, **dadurch gekennzeichnet, dass**
das Füllstandsmessgerät (1) magnetische Befestigungsmittel umfasst, insbesondere mindestens eines Haftmagneten, welche ausgelegt und eingerichtet sind, das Füllstandsmessgerät (1) an der Behälterwandung eines Behälters (51) zu befestigen.

6. Füllstandsmessgerät (1) nach einem der vorangehenden Ansprüche, **dadurch gekennzeichnet, dass**
das Füllstandsmessgerät (1) ein Gehäuse (17) umfasst, in welchem sich die Schwingungserzeugungseinrichtung (3), die Schall- und/oder Schwingungserfassungseinrichtung (5) und die Datenübertragungseinrichtung (21) und/oder die Datenauswerteinrichtung vollständig oder teilweise befinden.

7. Kit umfassend Behälter(51) und mindestens ein Füllstandsmessgerät (1) nach einem der vorangehenden Ansprüche,
wobei der Behälter (51) mindestens eine Behälterwandung (55), insbesondere Metallwandung, umfasst und das mindestens eine Füllstandsmessgerät (1) an dieser Behälterwandung (55) befestigt ist.

8. Kit nach Anspruch 7, **dadurch gekennzeichnet, dass**
der Behälter (51) ein, insbesondere zylindrisches, Silo, insbesondere Hochsilo, ist und/oder Schüttgut umfasst.

9. Verfahren für die Bestimmung des Füllstands eines Behälters (51) mit mindestens einem Füllstandsmessgerät (1), insbesondere nach einem der Ansprüche 1 bis 6, wobei der Behälter ein Silo ist und die Menge an Schüttgut bestimmt wird,
wobei das mindestens eine Füllstandsmessgerät (1) eine Schwingungserzeugungseinrichtung (3), eine Schall- und/oder Schwingungserfassungseinrichtung (5) und eine Datenübertragungseinrichtung (21) und/oder eine Datenauswerteinrichtung (21') umfasst,
wobei das Verfahren die folgenden Schritte aufweist
a) Schlaganregung (102) einer Behälterwandung des Behälters(51) durch mindestens einen Schlag der Schwingungserzeugungseinrichtung (3), wobei der mindestens eine Schlag Schwingungs- und/oder Schalldruckänderungen erzeugt,
b) Messung (104) der besagten Schwingungs- und/oder Schalldruckänderungen mit der Schall- und/oder Schwingungserfassungseinrichtung (5) unter Erzeugung von analogen und/oder digitalen Signalen,
c) Übertragung (108) der analogen und/oder digitalen Signale durch die Datenübertragungseinrichtung (21), insbesondere drahtlos, an eine von dem mindestens einen Füllstandsmessgerät (1) beabstandete Datenempfangseinrichtung (29) und/oder Übertragung der analogen und/oder digitalen Signale an die Datenauswerteinrichtung (21') des mindestens einen Füllstandsmessgeräts (1),
d) Berechnung (110) eines Füllstands basierend auf den analogen und/oder digitalen Signalen durch die Datenempfangseinrichtung (29) und/oder die Datenauswerteinrichtung.

10. Verfahren nach Anspruch 9, **dadurch gekennzeichnet, dass** die Berechnung des Füllstands auch auf Basis von analogen und/oder digitalen Signalen von Schwingungs- und/oder Schalldruckänderungen des ruhenden Silos erfolgt, wobei die analogen und/oder digitalen Signale mit der Schall- und/oder Schwingungserfassungseinrichtung (5) gemessen und durch die Datenübertragungseinrichtung (21) an die vom Füllstandsmessgerät (1) beabstandete Datenempfangseinrichtung übertragen werden und/oder an die Datenauswerteinrichtung des Füllstandsmessgeräts (1) übertragen werden.

11. Verfahren nach Anspruch 9 oder 10, **dadurch gekennzeichnet, dass** der Behälter (51) oder ein Referenzspeicher mit verschiedenen Füllständen gefüllt wird, wobei für jeden dieser Füllstände die durch eine Schlaganregung erzeugten Schwingungs- und/oder Schalldruckänderungen gemessen werden, insbesondere mit dem Messgerät, so dass analoge und/oder digitale Referenzsignale erhalten werden, wobei in Schritt d) die Berechnung eines Füllstands auch auf Basis der analogen und/oder digitalen Referenzsignale erfolgt.

12. Verfahren nach einem der Ansprüche 9 bis 11, **dadurch gekennzeichnet, dass** die Schwingungs- und/oder Schalldruckänderungen des Körperschalls und/oder Luftschalls bestimmt werden.

13. Verfahren nach einem der Ansprüche 9 bis 12, **dadurch gekennzeichnet, dass** das mindestens eine Füllstandsmessgerät (1), mindestens einen Haftmagneten umfasst, wobei der Schritt a) in die Schritte a1) und a2) unterteilt ist:
a1) Fixierung des Füllstandsmessgeräts (1) an dem Behälter (51) mittels des mindestens eines Haftmagneten,
a2) Schlaganregung einer Behälterwandung des Behälters (51) durch mindestens einen Schlag der Schwingungserzeugungseinrichtung (3), wobei der mindestens eine Schlag Schwingungs- und/oder Schandruckänderungen erzeugt.

14. Verfahren nach einem der Ansprüche 9 bis 13, **dadurch gekennzeichnet, dass** das Messgerät über einen ersten und zweiten Energiespeicher (7, 9) verfügt und/oder in Schritt c) die Übertragung der analogen und/oder digitalen Signale durch die Datenübertragungseinrichtung (21) drahtlos an eine von dem mindestens einen Füllstandsmessgerät (1) beabstandete Datenempfangseinrichtung erfolgt.

15. Verwendung des Füllstandsmessgeräts (1) nach einem der Ansprüche 1 bis 6 für die Bestimmung der Menge an Schüttgut in einem Behälter, insbesondere einem Silo.

## Claims

1. A fill level measuring device (1) for determining the amount of bulk material in a container (51) with a container wall, comprising
an oscillation generation unit (3), a sound and/or oscillation detection unit (5), and a data transmission unit (21) and/or a data evaluation unit (21'),
wherein the fill level measuring device (1) is adapted and arranged to generate, with the oscillation generation unit (3), oscillation and/or sound pressure changes at the container wall of the container (51),
wherein the sound and/or oscillation detection unit (5) is adapted and arranged to detect said oscillation and/or sound pressure changes and to convert them into analog and/or digital signals,
wherein the data transmission unit (21) is adapted and arranged to transmit the analog and/or digital signals and/or wherein the data evaluation unit (21') is adapted and arranged to process the analog and/or digital signals and to calculate a fill level, wherein the fill level measuring device (1) comprises a magnetic fastening, in particular at least one holding magnet, and the container is a silo.

2. The fill level measuring device (1) according to Claim 1, **characterized in that** the fill level measuring device (1) comprises a first energy store, in particular a battery, which is adapted and arranged to supply the oscillation generation unit (3), the data transmission unit (21) and/or the data evaluation unit (21') with energy.

3. The fill level measuring device (1) according to Claim 2, **characterized in that** the fill level measuring device (1) comprises a second energy store (9) which is connected to the first energy store (7) and the oscillation generation unit (3), wherein the second energy store (9) is a capacitor and/or is adapted and arranged to absorb energy from the first energy store (7) and to supply the oscillation generation unit (3) with energy, in particular for a higher power and/or voltage than maximally providable by the first energy store (7).

4. The fill level measuring device (1) according to any one of the preceding claims,
**characterized in that**
the oscillation generation unit (3) comprises an impact mechanism with a lifting magnet (11) and an impulse hammer or impulse pin (13), in particular a lifting magnet (11) with a nominal voltage of at least 10 V and/or a power of at least 8 W.

5. The fill level measuring device (1) according to any one of the preceding claims,
**characterized in that**
the fill level measuring device (1) comprises magnetic fastening means, in particular at least one holding magnet, which are adapted and arranged to fasten the fill level measuring device (1) to the container wall of a container (51).

6. The fill level measuring device (1) according to any one of the preceding claims,
**characterized in that**
the fill level measuring device (1) comprises a housing (17) in which the oscillation generation unit (3), the sound and/or oscillation detection unit (5), and the data transmission unit (21) and/or the data evaluation unit are entirely or partially located.

7. A kit comprising a container (51) and at least one fill level measuring device (1) according to any one of the preceding claims, wherein
the container (51) comprises at least one container wall (55), in particular metal wall, and the at least one fill level measuring device (1) is fastened to said container wall (55).

8. The kit according to Claim 7, **characterized in that**
the container (51) is a, in particular cylindrical, silo, in particular a tower silo, and/or comprises bulk material.

9. A method for determining the fill level of a container (51) with at least one fill level measuring device (1), in particular according to any one of Claims 1 to 6, wherein the container is a silo and the amount of bulk material is determined,
wherein the at least one fill level measuring device (1) comprises an oscillation generation unit (3), a sound and/or oscillation detection unit (5), and a data transmission unit (21) and/or a data evaluation unit (21'),
wherein the method includes the following steps
a) impact excitation (102) of a container wall of the container (51) by at least one impact of the oscillation generation unit (3), wherein the at least one impact generates oscillation and/or sound pressure changes,
b) measurement (104) of said oscillation and/or sound pressure changes with the sound and/or oscillation detection unit (5) to generate analog and/or digital signals,
c) transmission (108) of the analog and/or digital signals by the data transmission unit (21), in particularly wirelessly, to a data receiving unit (29) spaced apart from the at least one fill level measuring device (1) and/or transmission of the analog and/or digital signals to the data evaluation unit (21') of the at least one fill level measuring device (1),
d) calculation (110) of a fill level based on the analog and/or digital signals by the data receiving unit (29) and/or the data evaluation unit.

10. The method according to Claim 9, **characterized in that** the calculation of the fill level is also carried out based on analog and/or digital signals of oscillation and/or sound pressure changes of the silo at rest, wherein said analog and/or digital signals are measured with the sound and/or oscillation detection unit (5) and transmitted, by the data transmission unit (21), to the data receiving unit which is spaced apart from the fill level measuring device (1) and/or transmitted to the data evaluation unit of the fill level measuring device (1).

11. The method according to Claim 9 or 10, **characterized in that** the container (51) or a reference store is filled with different fill levels, wherein the oscillation and/or sound pressure changes generated by an impact excitation are measured for each of said fill levels, in particular with the measuring device, such that analog and/or digital reference signals are obtained, wherein, in step d), the calculation of a fill level is also carried out based on said analog and/or digital reference signals.

12. The method according to any one of Claims 9 to 11, **characterized in that** the oscillation and/or sound pressure changes of structure-borne sound and/or airborne sound are determined.

13. The method according to any one of Claims 9 to 12, **characterized in that** the at least one fill level measuring device (1) comprises at least one holding magnet, wherein step a) is divided into steps a1) and a2):
a1) fixing of the fill level measuring device (1) to the container (51) by means of the at least one holding magnet,
a2) impact excitation of a container wall of the container (51) by at least one impact of the oscillation generation unit (3), wherein the at least one impact generates oscillation and/or sound pressure changes.

14. The method according to any one of Claims 9 to 13, **characterized in that** the measuring device has a first and second energy store (7, 9) and/or, in step c), the transmission of the analog and/or digital signals by the data transmission unit (21) is carried out wirelessly to a data receiving unit which is spaced apart from the at least one fill level measuring device (1).

15. Use of the fill level measuring device (1) according to any one of Claims 1 to 6 for determining the amount of bulk material in a container, in particular a silo.

## Revendications

1. Dispositif de mesure de niveau de remplissage (1) pour déterminer la quantité de matière en vrac dans un récipient (51) avec une paroi de récipient, comprenant un dispositif générateur de vibrations (3), un dispositif enregistreur de son et / ou de vibrations (5) et un dispositif de transmission de données (21) et / ou un dispositif d'analyse de données (21'),
dans lequel le dispositif de mesure de niveau de remplissage (1) est conçu et ajusté pour générer des variations de pression acoustique et / ou de vibration sur la paroi du récipient (51) avec le dispositif générateur de vibrations (3),
dans lequel le dispositif enregistreur de son et / ou de vibrations (5) est conçu et ajusté pour enregistrer ces variations de pression acoustique et / ou de vibration et les convertir en signaux analogiques et / ou numériques,
dans lequel le dispositif de transmission de données (21) est conçu et ajusté pour transmettre les signaux analogiques et / ou numériques et / ou dans lequel le dispositif d'analyse de données (21') est conçu et ajusté pour traiter les signaux analogiques et / ou numériques et calculer un niveau de remplissage,
dans lequel le dispositif de mesure de niveau de remplissage (1) comprend une fixation magnétique, notamment au moins un aimant adhérent, et le récipient est un silo.

2. Dispositif de mesure de niveau de remplissage (1) selon la revendication 1,
**caractérisé en ce que**
le dispositif de mesure de niveau de remplissage (1) comprend un premier accumulateur d'énergie, notamment une batterie, lequel est conçu et ajusté pour alimenter en énergie le dispositif générateur de vibrations (3), le dispositif de transmission de données (21) et / ou le dispositif d'analyse de données (21').

3. Dispositif de mesure de niveau de remplissage (1) selon la revendication 2,
**caractérisé en ce que**
le dispositif de mesure de niveau de remplissage (1) comprend un second accumulateur d'énergie (9), lequel est relié au premier accumulateur d'énergie (7) et au dispositif générateur de vibrations (3),
dans lequel le second accumulateur d'énergie (9) est un condensateur et / ou est conçu et ajusté pour absorber de l'énergie du premier accumulateur d'énergie (7) et pour alimenter en énergie le dispositif générateur de vibrations (3), notamment à une puissance et / ou une tension supérieures à celles pouvant être fournies au maximum par le premier accumulateur d'énergie (7).

4. Dispositif de mesure de niveau de remplissage (1) selon l'une des revendications précédentes, **caractérisé en ce que**
le dispositif générateur de vibrations (3) comprend un mécanisme de percussion avec un aimant de levage (11) et un marteau à impulsions ou un boulon à impulsions (13), notamment un aimant adhérent (11) avec une tension nominale d'au moins 10 V et / ou une puissance d'au moins 8 W.

5. Dispositif de mesure de niveau de remplissage (1) selon l'une des revendications précédentes, **caractérisé en ce que**
le dispositif de mesure de niveau de remplissage (1) comprend des moyens de fixation magnétiques, notamment au moins un aimant adhérent, lesquels sont conçus et ajustés pour fixer le dispositif de mesure de niveau de remplissage (1) à la paroi d'un récipient (51).

6. Dispositif de mesure de niveau de remplissage (1) selon l'une des revendications précédentes, **caractérisé en ce que**
le dispositif de mesure de niveau de remplissage (1) comprend un boîtier (17), dans lequel le dispositif générateur de vibrations (3), le dispositif enregistreur de son et / ou de vibrations (5) et le dispositif de transmission de données (21) et / ou le dispositif d'analyse de données sont logés en partie ou en totalité.

7. Kit comprenant un récipient (51) et au moins un dispositif de mesure de niveau de remplissage (1) selon l'une des revendications précédentes, dans lequel le récipient (51) comprend au moins une paroi de récipient (55), notamment une paroi métallique, et ledit dispositif de mesure de niveau de remplissage (1) au moins est fixé à cette paroi de récipient (55).

8. Kit selon la revendication 7, **caractérisé en ce que**
le récipient (51) est un silo, en particulier cylindrique, notamment un silo vertical, et / ou renferme de la matière en vrac.

9. Procédé pour déterminer le niveau de remplissage d'un récipient (51) avec au moins un dispositif de mesure de niveau de remplissage (1), notamment selon l'une des revendications 1 à 6, dans lequel le récipient est un silo et la quantité de matière en vrac est déterminée,
dans lequel ledit dispositif de mesure de niveau de remplissage (1) au moins comprend un dispositif générateur de vibrations (3), un dispositif enregistreur de son et / ou de vibrations (5) et un dispositif de transmission de données (21) et / ou un dispositif d'analyse de données (21'),
dans lequel le procédé présente les étapes suivantes
a) l'excitation par percussion (102) d'une paroi du récipient (51) par au moins un choc du dispositif générateur de vibrations (3), dans lequel ledit choc au moins génère des variations de pression acoustique et / ou de vibration,
b) la mesure (104) desdites variations de pression acoustique et / ou de vibration avec le dispositif enregistreur de son et / ou de vibrations (5) moyennant la production de signaux analogiques et / ou numériques,
c) la transmission (108) des signaux analogiques et / ou numériques par le dispositif de transmission de données (21), notamment sans fil, à un dispositif de réception de données (29) espacé dudit dispositif de mesure de niveau de remplissage (1) au moins et / ou la transmission des signaux analogiques et / ou numériques au dispositif d'analyse de données (21') dudit dispositif de mesure de niveau de remplissage (1) au moins,
d) le calcul (110) d'un niveau de remplissage reposant sur les signaux analogiques et / ou numériques par le dispositif de réception de donnée (29) et / ou le dispositif d'analyse de données.

10. Procédé selon la revendication 9, **caractérisé en ce que**
le calcul du niveau de remplissage s'effectue aussi sur la base des signaux analogiques et / ou numériques provenant des variations de pression acoustique et / ou de vibration du silo au repos, dans lequel les signaux analogiques et / ou numériques sont mesurés avec le dispositif enregistreur de son et / ou de vibrations (5) et sont transmis au dispositif de réception de données espacé dudit dispositif de mesure de niveau de remplissage (1) et / ou au dispositif d'analyse de données du dispositif de mesure de niveau de remplissage (1) par le dispositif de transmission de données (21).

11. Procédé selon la revendication 9 ou 10, **caractérisé en ce que**
le récipient (51) ou un réservoir de référence est rempli à différents niveaux, dans lequel les variations de pression acoustique et / ou de vibration générées moyennant une excitation par percussion sont mesurées pour chacun de ces niveaux de remplissage, notamment avec le dispositif de mesure, de sorte que des signaux de référence analogiques et / ou numériques sont obtenus,
dans lequel le calcul d'un niveau de remplissage s'effectue aussi sur la base des signaux de référence analogiques et / ou numériques au cours de l'étape d).

12. Procédé selon l'une des revendications 9 à 11, **caractérisé en ce que**
les variations de pression acoustique et / ou de vibration du bruit solidien et / ou du bruit aérien sont déterminées.

13. Procédé selon l'une des revendications 9 à 12, **caractérisé en ce que** ledit dispositif de mesure de niveau de remplissage (1) au moins comprend au moins un aimant adhérent, dans lequel l'étape a) est divisée dans les étapes a1) et a2) :
a1) la fixation du dispositif de mesure de niveau de remplissage (1) au récipient (51) au moyen dudit aimant adhérent au moins,
a2) l'excitation par percussion d'une paroi du récipient (51) par au moins un choc du dispositif générateur de vibrations (3), dans lequel ledit choc au moins génère des variations de pression acoustique et / ou de vibration.

14. Procédé selon l'une des revendications 9 à 13, **caractérisé en ce que**
le dispositif de mesure dispose d'un premier et d'un second accumulateur d'énergie (7, 9) et / ou la transmission des signaux analogiques et / ou numériques par le dispositif de transmission de données (21) à un dispositif de réception de données (29) espacé dudit dispositif de mesure de niveau de remplissage (1) au moins s'effectue sans fil au cours de l'étape c).

15. Utilisation du dispositif de mesure de niveau de remplissage (1) selon l'une des revendications 1 à 6 pour déterminer la quantité de matière en vrac dans un récipient, notamment dans un silo.
